Europäisches Patentamt

European Patent Office

Office européen des brevets

(19)

(11) Veröffentlichungsnummer : **0 377 760 B1**

(12) **EUROPÄISCHE PATENTSCHRIFT**

(45) Veröffentlichungstag der Patentschrift :
**25.03.92 Patentblatt 92/13**

(51) Int. Cl.[5] : **B60C 25/14,** G01M 17/02

(21) Anmeldenummer : **89100242.0**

(22) Anmeldetag : **07.01.89**

(54) **Vorrichtung zum Aufspreizen von Fahrzeugreifen im Wulstbereich.**

(43) Veröffentlichungstag der Anmeldung :
**18.07.90 Patentblatt 90/29**

(45) Bekanntmachung des Hinweises auf die
Patenterteilung :
**25.03.92 Patentblatt 92/13**

(84) Benannte Vertragsstaaten :
**AT BE CH DE FR GB IT LI NL SE**

(56) Entgegenhaltungen :
**FR-A- 1 005 281
US-A- 1 053 641
US-A- 1 531 973
US-A- 4 751 843**

(73) Patentinhaber : **Spezialmaschinenbau Steffel
GmbH & Co. KG
Robert-Bosch-Strasse 1-3
W-2418 Ratzeburg (DE)**

(72) Erfinder : **Steffel, Horst
Am Fürstenhof 9
W-2401 Gross Grönau (DE)**

(74) Vertreter : **Dipl.-Ing. H. Hauck Dipl.-Ing. E.
Graalfs Dipl.-Ing. W. Wehnert Dr.-Ing. W.
Döring
Neuer Wall 41
W-2000 Hamburg 36 (DE)**

**Beschreibung**

Die Erfindung bezieht sich auf eine Vorrichtung zum Aufspreizen von Fahrzeugreifen im Wulstbereich, insbesondere zur Sichtprüfung der Innen- und Außenwandung der Reifen nach dem Oberbegriff des Patentanspruchs 1.

Bei der Herstellung von Kraftfahrzeugreifen wird eine Anzahl unterschiedlicher Prüfungen am fertigen Produkt vorgenommen. Eine besteht darin, Innenwandung und Außenwandung über Sichtkontrolle zu prüfen, ob sie beispielsweise ausvulkanisiert sind, Haarrisse aufweisen oder dergleichen. Ferner werden in dieser Prüfungsphase mögliche Heizaustriebe entfernt.Um in den Innenraum eines Reifens hineinzusehen, muß dieser im Wulstbereich entsprechend aufgespreizt werden. Hierzu sind verschiedene Spreizvorrichtungen bekanntgeworden.

Aus der US-A-4 751 843 ist eine Vorrichtung zum Aufspreizen von Fahrzeugreifen im Wulstbereich bekanntgeworden, bei der Spreizmittel in Form von Rollen den Wulst eines aufgenommenen Fahrzeugreifens hintergreifen und gegen eine drehend angetriebene Scheibe anpressen. Die drehend angetriebene Scheibe ist in einem Winkel von 30° zur Vertikalen geneigt. Oberhalb der Spreizvorrichtung ist eine Fördervorrichtung angeordnet, welche den Reifen in eine Position oberhalb der Drehantriebsscheibe bringt. Von dieser rutscht der Reifen auf die Drehantriebsscheibe und wird mit Hilfe eines ausfahrbaren Stiftes gehalten, bevor die Speizrollen mit dem Wulst in Eingriff treten. Ist die eine Innenseite der Reifenflanke inspiziert worden, wird der Reifen freigegeben und gelangt auf ein darunterliegendes horizontales Förderband zwecks Förderung des Reifens zu einer zweiten Spreizvorrichtung, die genau so aufgebaut ist wie die erste. Bevor eine weitere Aufgabevorrichtung den Reifen in gleicher Weise in die zweite Spreizvorrichtung transportiert, sorgt eine Wendeeinrichtung dafür, daß der Reifen um 180° gedreht wird. Während der Inspektion einer Reifenflanke in der ersten Spreizvorrichtung kann gleichzeitig eine Inspektion eines zweiten Reifens in der zweiten Spreizvorrichtung stattfinden. Die Gesamtinspektionszeit für einen Reifen ist jedoch verhältnismäßig lang, da das Fördern und Wenden zur zweiten Spreizvorrichtung eine gewisse Zeit dauert. Die bekannte Vorrichtung baut außerdem sehr platzraubend, wobei der Platzbedarf durch die Wendeeinrichtung noch vergrößert wird.

Der Erfindung liegt daher die Aufgabe zugrunde, eine Vorrichtung zum Aufspreizen von Fahrzeugreifen so auszuführen, daß die automatische Aufgabe und Abnahme der Reifen mit einfachen Mitteln und in platzsparender Weise erfolgt.

Diese Aufgabe wird gelöst durch die Merkmale des Patentanspruchs 1.

Die Erfindung sieht eine Aufgabevorrichtung vor, in der ein Reifen zentriert aufgenommen werden kann. Eine Greifvorrichtung ist zwischen der Aufgabe- und der Aufnahmevorrichtung verstellbar und transportiert einen Reifen von der Aufgabevorrichtung zur Aufnahmevorrichtung. Für die Zentrierung wird vorzugsweise eine geneigte Aufgabefläche in der Aufnahmevorrichtung vorgesehen, die zwei beabstandete Zentrieranschläge, vorzugsweise Zentrierrollen aufweist. Da die Reifen bekanntlich unterschiedliche Durchmesser haben, ist eine verstellbare Anordnung der Zentrieranschläge vorteilhaft. Eine genaue Zentrierung würde jedoch verhältnismäßig aufwendig sein. Daher kann es ausreichen, wenn die Zentrieranschläge an einer Feder aufgehängt sind und eine Auslenkung der Anschläge je nach Gewicht des Reifens stattfindet. Da ein im Durchmesser größerer Reifen normalerweise auch ein größeres Gewicht hat, wird dadurch eine annähernd gleichmäßige zentrierte Anordnung des Reifens in der Aufgabevorrichtung erreicht.

Die Greifvorrichtung weist vorzugsweise zwei Rollenpaare auf, die den Reifen in der Aufgabevorrichtung an diametral gegenüberliegenden Seiten am Umfang erfassen, um ihn anschließend zur Aufnahmevorrichtung zu bewegen. Die Greifrollen müssen zur Ausübung einer Greifbewegung aufeinander zu bzw. voneinander fort verstellbar sein. Daher weist nach einer Ausgestaltung der Erfindung die Greifvorrichtung zwei Arme auf, die zum einen jeder für sich verschwenbar sind und zum anderen gemeinsam um eine weitere Achse verschwenkt werden können. Außerdem sieht die Greifvorrichtung eine Verdrehmöglichkeit der Greifrollen vor, um den Reifen nach der Betrachtung der ersten Reifenflanke von innen um 180° zu drehen und erneut in die Aufnahmevorrichtung zu bringen, damit auch die gegenüberliegende Innenflanke geprüft werden kann. Vorzugsweise ist nur ein Rollenpaar mit Hilfe eines geeigneten an einem Arm der Greifvorrichtung angeordneten Drehantrieb verstellbar, während das andere Rollenpaar frei mitdrehen kann. Eine dem zweiten Rollenpaar zugeordnete Verriegelungsvorrichtung sorgt dafür, daß eine eingenommene Position beibehalten wird.

Die Reifen sind bekanntlich unterschiedlich breit. Damit nun die Reifen an der hinteren Seite eine einheitliche Auflageposition erreichen, wird vorzugsweise der Reifen nach dem Abnehmen aus der Aufgabevorrichtung zunächst so gedreht, daß seine in der Aufnahmevorrichtung freie Seite in der Prüfposition die Anlageseite wird. Es versteht sich, daß der Reifen zunächst entspreizt wird, bevor er durch eine Drehung um 180° in die zweite Prüfposition gebracht werden kann.

Bei der erfindungsgemäßen Vorrichtung übernehmen im übrigen mindestens drei Rollen, die mit einem Bund den hinteren Wulst eines Reifens hintergreifen, die Aufspreizarbeit. Die Rollen sind zwar drehbar auf einem Lagerbauteil gelagert, jedoch bezüglich des drehenden Reifens ortsfest. Die Spreizrollen drücken den Reifen gegen eine Drehantriebsvorrichtung, welche den Reifen durch Ergreifen der zugeordneten Flanke in Drehung versetzt. Die Drehantriebsvorrichtung weist vorzugsweise eine Ringfläche auf, gegen die die Reifenfläche gedrückt wird. Besonders vorteilhaft ist eine konische Form der Ringfläche mit einer von den Rollen fortgerichteten Neigung. Insbesondere die konische Fläche verhindert, daß die Reifenflanke beim Spreizen nach innen gedrückt wird.

Die Spreizrollen sind vorzugsweise konisch mit einer Verjüngung zum freien Ende der Rollen hin, an dem auch der Bund angebracht ist.

Damit der Bund der Spreizrollen den Wulst erfassen und nach außen drücken kann, ist das die Rollen haltende Lagerbauteil axial verstellbar. Die Rollen sind darüber hinaus vorzugsweise auch quer zu ihrer Achse verstellbar, damit ein Reifen mit dem hinteren Wulst über die Bunde hinweg auf die Rollen aufsetzbar ist. Vorzugsweise sind die Spreizrollen mit Hilfe einer zweiten Verstellvorrichtung gemeinsam verstellbar. Zum Beispiel ist auf der Achse des Lagerbauteils eine Buchse drehbar gelagert, die einen radialen Abschnitt aufweist, an dem ein erster Schwenkhebel angelenkt ist. Am Ende des ersten Schwenkhebels ist ein zweiter Schwenkhebel angelenkt, der seinerseits mit einem Ende drehfest mit einem Schwenkzapfen verbunden ist. Am Schwenkzapfen ist ein Schwenkarm angebracht, an dem jeweils eine Spreizrolle drehbar gelagert ist. Wird nun die Lagerbuchse gedreht, erfolgt ein Verschwenken sämtlicher Spreizrollen gemeinsam, um die Spreizrollen in oder außer Eingriff mit einem Reifen zu bringen. Eine besonders günstige Betrachtungsposition wird bei der erfindungsgemäßen Vorrichtung erreicht, wenn die Anlage- bzw. Ringfläche zur Horizontalen geneigt ist, beispielsweise um einen Winkel von etwa 30° gegenüber der Vertikalen. Eine derartige geneigte Anordnung ermöglicht auch auf einfache Weise ein Entfernen eines Reifens aus der Spreizvorrichtung. Zu diesem Zweck kann zum Beispiel ein Auswerfstift in der Ringfläche verstellbar gelagert und mittels einer Kraftvorrichtung in eine Position über die Ringfläche hinausstehend verstellbar sein. Die Anordnung ist dabei so getroffen, daß zu Beginn bzw. zum Ende des Prüfvorgangs der Auswerfstift oben liegt. Wird nach dem Ende des Prüfvorgangs eine leichte Entspreizung vorgenommen, kann der Auswerfstift den oberen Teil des Reifens mit seinem Wulst über den Bund überschieben und den Reifen in eine annähernd vertikale Lage bringen, so daß er nunmehr ungehindert nach unten fallen und abtransportiert werden kann. Der Auswerfstift kann zum Beispiel von einer Feder beaufschlagt werden, die ihn über die Anlagefläche hinauszudrücken sucht. Alternativ kann auch ein Verstellzylinder verwendet werden, um den Auswerfstift zu betätigen.

Die Erfindung wird nachfolgend anhand eines in Zeichnungen dargestellten Ausführungsbeispiels näher erläutert.

Fig. 1 zeigt schematisch in Seitenansicht eine Vorrichtung nach der Erfindung.

Fig. 2 zeigt eine Draufsicht auf eine Greifvorrichtung der Vorrichtung nach Fig. 1.

Fig. 3 zeigt eine Einzelheit der Greifvorrichtung nach Fig. 2.

Fig. 4 zeigt einen Schnitt durch einen Teil der Spreizvorrichtung nach Fig. 1.

Fig. 5 zeigt eine Ansicht der Spreizvorrichtung nach Fig. 4 in Richtung Pfeil 5.

Fig. 6 zeigt eine Ansicht der Vorrichtung nach Fig. 4 in Richtung Pfeil 6.

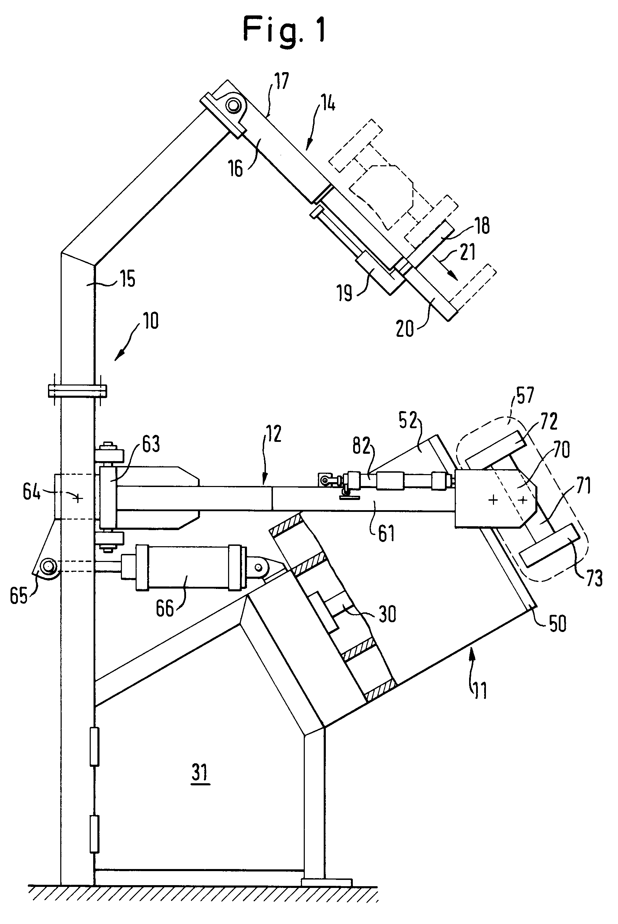

Ein Maschinengestell 10 hält eine Spreizvorrichtung 11, eine Greifvorrichtung 12 sowie eine Aufgabevorrichtung 14. Die Aufgabevorrichtung 14 befindet sich am oberen geneigten Ende von zwei parallelen Stützen des Gestells 10, von denen in Fig. 1 eine bei 15 zu erkennen ist. Die Stützen 15 halten einen zur Horizontalen geneigten Auflageabschnitt 16 mit einer annähernd sich in eine Ebene erstreckenden Auflagefläche 17. Zwei drehbar gelagerte Rollen, von denen eine bei 18 dargestellt ist, sind mit einer Achse annähernd senkrecht zur Auflagefläche 17 drehbar oberhalb der Auflagefläche 17 gelagert. Die Drehachsen der Rollen 18 sind mit einer Federanordnung 19 verbunden und außerdem in einem Schlitz 20 des Auflagerabschnitts 16 verschiebbar. Durch einen Druck auf die Rollen 18 können sie daher in Richtung des Pfeils 21 verstellt werden und zum Beispiel die gestrichelt gezeigte Position einnehmen, wobei die Lage abhängig ist vom Gewicht eines Reifens, der auf die Auflagefläche 17 aufgelegt wird, beispielsweise durch eine geeignete Transportvorrichtung. Durch die beabstandeten Rollen 18 erfolgt eine erste Ausrichtung eines aufgegebenen Reifens, und mit Hilfe der Federanordnung 19 erfolgt eine weitere annähernde Orientierung derart, daß abhängig vom Gewicht und damit der Größe des Reifens dieser annähernd eine zentrierte Lage auf der Auflagefläche 17 einnimmt.

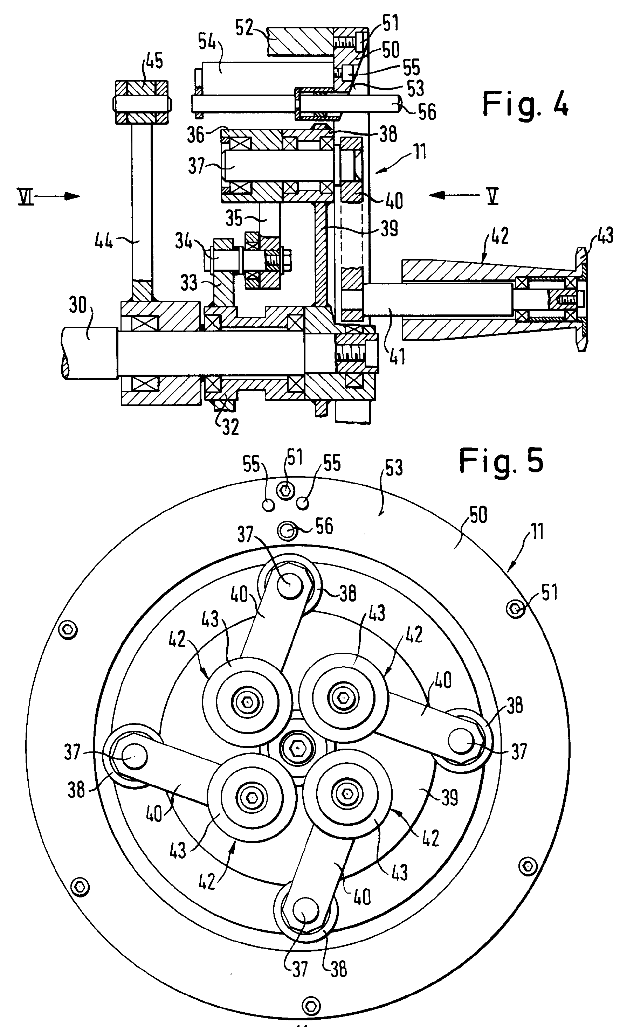

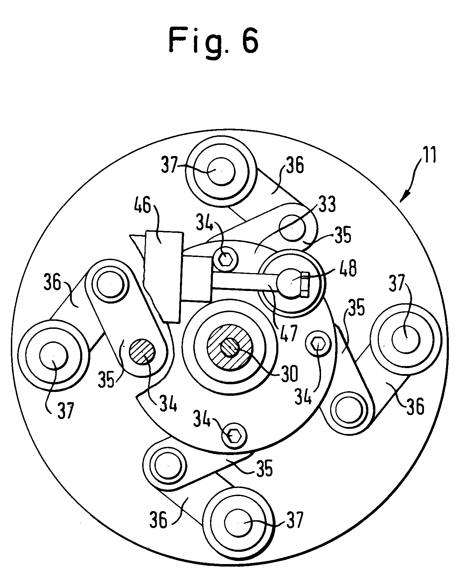

Die Spreizvorrichtung 11 ist in den Figuren 4 bis 6 näher dargestellt. Die Spreizvorrichtung 11 weist eine Achse 30 auf, die drehfest, jedoch axial verschiebbar in einer Haltevorrichtung 31 für die Spreizvorrichtung 11 gelagert und mit Hilfe eines nicht gezeigten Verstellzylinders verstellbar ist. Auf der Achse 30 ist mittels Kugellagern axial fest eine Buchse 32 drehbar gelagert. Auf dem Umfang der Buchse 32 ist eine Scheibe 33 drehfest angebracht. In um 90° versetzten Winkelabständen sind vier Bolzen 34 in einer entsprechenden Durchbohrung der Scheibe 33 befestigt. Auf jeder Buchse 34 ist verschwenkbar ein Hebel 35 angebracht, der an einem weiteren Hebel 36 angelenkt ist (siehe Fig. 6). Das andere Ende des Hebels 36 sitzt drehfest auf einem Schwenkzapfen 37, der in einem Lager 38 verdrehbar gelagert ist. Das Lager 38 ist mittels einer radialen Platte 39 fest mit der Achse 30 verbunden. Auf dem Schwenkzapfen 37 sitzt ein Schwenkhebel 40, an dessen unterem Ende im rechten Winkel abstehend ein Drehzapfen 41 angebracht ist. Er lagert drehbar eine Rolle 42, deren Umfang sich zum freien Ende hin konisch verjüngt. Am freien Ende weist sie einen radialen Bund 43 auf.

Ein radialer Arm 44 ist mittels einer auf die Achse 30 aufgespannten Buchse fest mit der Achse 30 verbunden. In Fig. 4 ist dieser Arm um 90° verdreht dargestellt. In Wirklichkeit erstreckt er sich senkrecht zur Zeichenebene nach hinten. Am äußeren Ende des Arms ist eine Anlenkverbindung 45 für einen Verstellzylinder 46 (Fig. 6) angebracht. Die Verstellstange 47 des Zylinders ist über einen Querbolzen 48 gelenkig mit der Scheibe 33 verbunden. Bei Betätigung des Zylinders 46 wird mithin die Scheibe 33 um einen gewissen Winkel um die Achse 30 verdreht. Über die beschriebene Hebelverbindung erfolgt dadurch ein Verschwenken der Schwenkarme 40 und damit auch der Rollen 42, um die Rollen für die Aufnahme eines Reifens bereitzuhalten und nach Aufnahme des Reifens diesen mit dem hinteren Wulst zu spreizen. Die Axialbewegung der Achse 30 führt dann zum Eingriff der Bunde 43 der Rollen 42 mit dem Wulst.

Ein Ring 50 ist mittels Schrauben 51 an einem zylindrischen Körper 52 angebracht, der mit Hilfe einer nicht gezeigten Drehvorrichtung in Drehung versetzbar ist. Der Ring 50 weist eine konische Ringfläche 53 auf, deren Neigung nach unten sich von den Rollen 42 forterstreckt. Bei der beschriebenen Spreizung des Reifens mit Hilfe der Rollen 42 wird die Reifenwand gegen die Ringfläche 43 angelegt.

In einem Lagerbauteil 54, der mit Hilfe von Schrauben 55 an der Rückseite des Rings 50 angebracht ist, ist ein Auswerfstift 56 verschiebbar gelagert. Der Auswerfstift 56 ist mittels einer nicht dargestellten Feder so vorgespannt, daß er im unbelasteten Zustand über die Anlagefläche 53 hinaussteht. Wird ein Reifen gegen die Anlagefläche 53 angedrückt, versenkt sich der Auswerfstift 56. Wird hingegen die Spreizung zurückgenommen, drückt die Feder den Auswerfstift 56 nach außen und dabei den Reifen über die jeweils oberen Rollen 42 bzw. deren Bunde hinweg, so daß der Reifen aus der geneigten Position, wie sie in Fig. 1 mit 57 angedeutet ist, annähernd in die Vertikale gelangt und dadurch automatisch herabfällt. Ein besonderes Entfernen des Reifens aus der Spreizvorrichtung 11 ist daher nicht erforderlich.

Die Greifvorrichtung 12, mit der ein Reifen von der Aufgabevorrichtung 14 zur Spreizvorrichtung 11 transportiert wird, ist in den Figuren 1 bis 3 näher dargestellt. Sie weist zwei Arme 60, 61 auf, die bei 62, 63 an einer Welle 64 zwischen den Stützen 15 angelenkt sind. Die Verschwenkung der Arme 60, 61 erfolgt um eine Achse senkrecht zu den Armen 60, 61. Die Welle 64 ist um eine horizontale Achse verschwenkbar. Zu diesem Zweck ist an der Welle ein Arm 65 angebracht (Fig. 1), an dem die Verstellstange eines Verstellzylinders 66 angreift, der an der Halterung 31 angelenkt ist. Mit Hilfe des Verstellzylinders 66 können daher die Arme 60, 61 um eine horizontale Achse verschwenkt werden. Ein Verstellzylinder 67 ist an der Welle 64 angelenkt sowie einem Arm 61. Außerdem ist an der gelenkigen Verbindung zwischen dem Arm 60 und einer winkligen Verlängerung 68 des Arms 61 über den Drehpunkt 63 hinaus ein Verbindungsstück 69 angelenkt, dessen Länge verstellbar ist. Bei Betätigung des Zylinders 67 werden daher die Arme 60, 61 aufeinander zu bzw. voneinander fort verschwenkt.

Jeder Arm 60, 61 weist am freien Ende einen Kopf auf, von dem in den Figuren nur der eine Kopf 70 zu erkennen ist. Der Kopf 70 lagert ein Paar Rollen 72, 73, die beabstandet am Umfang eines Reifens 57 (Fig. 1) angreifen. Mit Hilfe der Rollenpaare an den Armen 60, 61 kann daher ein in der Aufgabevorrichtung 14 zentriert liegender Reifen zentriert erfaßt und zur Spreizvorrichtung bewegt werden, um ihn über die Spreizrollen 42 gegen die Anlagefläche 53 zu bewegen.

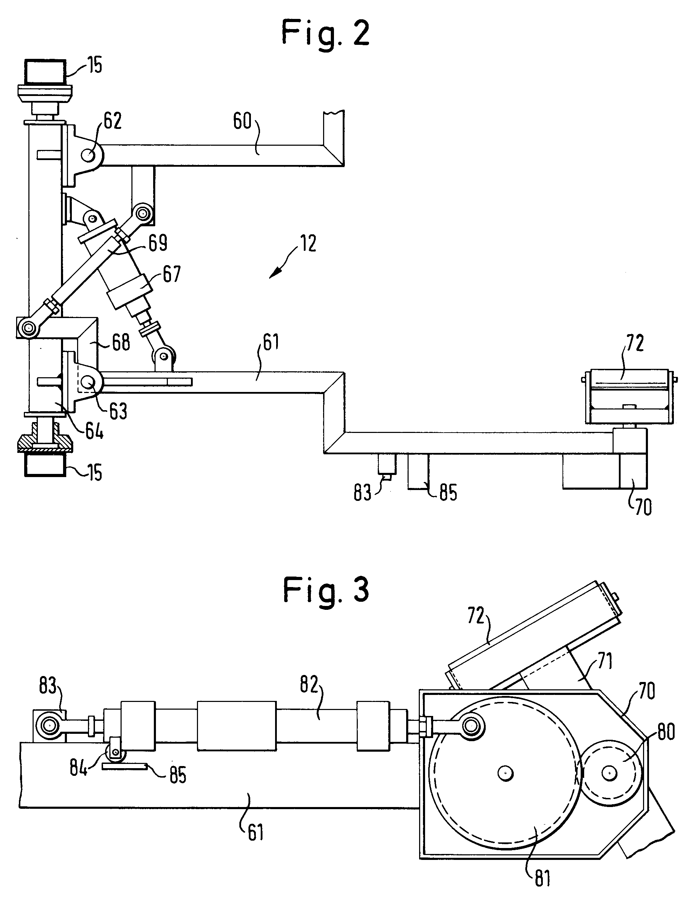

Die Rollenpaare sind in den Köpfen 70 um eine Achse quer zu den Armen 60 bzw. 61 verdrehbar. Zu diesem Zweck sitzt ein Zahnrad 80 auf der Drehachse (Fig. 3), das mit einem größeren Zahnrad 81 kämmt, das drehbar vom Arm 61 gelagert wird und an dem gelenkig ein Verstellzylinder 82 angreift, der seinerseits am Arm 61 bei 83 angelenkt ist. Der Verstellzylinder 83 ist mit einer Rolle 84 versehen, die auf einer Führungsplatte 85 ruht. Wird der Verstellzylinder 82 betätigt, wird das zugeordnete Rollenpaar verschwenkt. Ein zwischen den Rollenpaaren 72 aufgenommener Reifen kann daher gedreht werden. Dies ist erforderlich, um von einer ersten Prüfposition, wie sie in Fig. 1 dargestellt ist, in die zweite zu gelangen, bei der der Reifen um 180° gedreht wird, so daß die zweite Flanke gegen die Ringfläche 53 zu liegen kommt. Damit immer ein gleicher Abstand bei unterschiedlich dicken Reifen im Hinblick auf die Ringfläche 53 erhalten wird, wird ein Reifen, wenn er in der Aufgabevorrichtung 14 erfaßt wird, beim Transport zur Spreizvorrichtung 11 zunächst so verdreht, daß die in der Aufgabevorrichtung freie Seite in der Aufnahmevorrichtung die Anlageseite wird. Nach Beendigung des ersten Prüfdurchgangs, d.h. nach Drehung des Reifens mit Hilfe des Ringes 50 und 360°, wird der Reifen erneut von der Greifvorrichtung 12 erfaßt. Gleichzeitig bzw. kurzzeitig danach erfolgt ein Entspreizen in der beschriebenen Art und Weise, so daß die Greifvorrichtung mit Hilfe der Rollenpaare und der beschriebenen Drehantriebsvorrichtung den Reifen um 180° drehen und wieder in Prüfposition bringen kann. Die Drehantriebsvorrichtung nach Fig. 3 betätigt nur ein Rollenpaar. Das Rollenpaar am anderen Arm 60 dreht frei mit. Damit jedoch eine eingenommene Drehposition beibehalten wird, ist dem Kopf 70 des Arms 60 eine nicht gezeigte Verriegelung zugeordnet.

Vor die Ringfläche 53 kann eine nicht gezeigte, vorzugsweise zylindrische, frei drehbar gelagerte Rolle geschwenkt werden, gegen die der Reifen in diesem Bereich des Rings 50 anliegt. Eine derartige Rolle dient dazu, den Reifen lokal nach innen zu drücken, wodurch eine spezielle Betrachtungsmöglichkeit gegeben ist, beispielsweise festzustellen ob Haarrisse vorhanden sind.

## Patentansprüche

1. Vorrichtung zum Aufspreizen von Fahrzeugreifen im Wulstbereich, insbesondere zur Sichtprüfung der Innen- und Außenwandung der Reifen sowie zum Entfernen von Hitzeaustrieben, mit einer in einem Maschinengestell vorgesehenen Aufnahmevorrichtung, bei der mindestens drei parallele Rollen (42) auf einem Lagerbauteil (30) drehbar gelagert sind, die mittels einer ersten Verstellvorrichtung in Achsrichtung der Rollen (42) verstellbar gelagert sind, wobei die Rollen (42) mit einem Bund (43) den hinteren Wulst des Reifens hintergreifen und bei Verstellung des Lagerbauteils (30) die zugeordnete Reifenflanke gegen eine Drehantriebsvorrichtung (50, 53) drücken dergestalt, daß der Reifen gespreizt und um die ortsfest gehaltenen Rollen (42) gedreht wird, und einer der Aufnahmevorrichtung zugeordneten Aufgabevorrichtung (14) zur zentrierten Anordnung des zu prüfenden Reifens im Abstand zur Aufnahmevorrichtung, dadurch gekennzeichnet, daß die Aufgabevorrichtung (14) Zentriermittel (18) aufweist zur zentrierten Anordnung eines Reifens in der Aufgabevorrichtung und daß eine eine Greifvorrichtung (72) aufweisende Übergabevorrichtung (12) vorgesehen ist, die einen Reifen von der Aufgabevorrichtung (14) zur Aufnahmevorrichtung transportiert und die Greifvorrichtung (72) um eine Achse drehbar gelagert ist zwecks Verdrehung des erfaßten Reifens um 180° und Anlage der anderen Reifenflanke an der Drehantriebsvorrichtung (50, 53).

2. Vorrichtung nach Anspruch 1, dadurch gekennzeichnet,daß die Aufgabevorrichtung (14) eine geneigte Aufgabefläche (17) aufweist, der zwei beabstandete Zentrieranschläge, vorzugsweise Zentrierrollen (18), zugeordnet sind.

3. Vorrichtung nach Anspruch 2, dadurch gekennzeichnet,daß die Zentrieranschläge (18) in der Ebene der Aufgabefläche (17) verschiebbar gelagert und durch eine Zugfederanordnung (19) gehalten sind.

4. Vorrichtung nach einem der Ansprüche 1 bis 3, dadurch gekennzeichnet, daß die Greifvorrichtung zwei Rollenpaare (72) aufweist, die an diametral gegenüberliegenden Seiten am Umfang des Reifens angreifen, und die Rollenpaare (72) mittels einer dritten Verstellvorrichtung (67) aufeinander zu und voneinander fort bewegbar sind.

5. Vorrichtung nach einem der Ansprüche 1 bis 4, dadurch gekennzeichnet, daß die Greifvorrichtung (12) zwei Arme (60, 61) aufweist, die gemeinsam um eine Achse schwenkbar gelagert und mittels einer vierten Verstellvorrichtung (66) schwenkbar sind, um die Greifvorrichtung zwischen der Aufgabevorrichtung (14) und der Aufnahmevorrichtung (11) zu verschwenken.

6. Vorrichtung nach Anspruch 4 und 5, dadurch gekennzeichnet, daß die dritte Verstellvorrichtung (67) zwischen den Armen (60, 61) angeordnet ist, die getrennt verschwenkbar gelagert sind.

7. Vorrichtung nach einem der Ansprüche 4 bis 6, dadurch gekennzeichnet, daß die die Rollen eines Rollenpaares verbindende Achse mittels einer Drehwelle verschwenkbar gelagert ist und die Drehwelle über ein Getriebe (80, 81) mit einer fünften Verstellvorrichtung (82) gekoppelt ist.

8. Vorrichtung nach Anspruch 7, dadurch gekennzeichnet,daß der Drehwelle des anderen Rollenpaares eine Verriegelungsvorrichtung zugeordnet ist.

9. Vorrichtung nach einem der Ansprüche 1 bis 8, dadurch gekennzeichnet, daß die Greifvorrichtung den von der Aufgabevorrichtung (14) aufgenommenen Reifen zunächst so weit dreht, daß die in der Aufgabevorrichtung freie Flanke in die Aufnahmevorrichtung zur Anlage an die Drehantriebsvorrichtung (50, 53) gebracht wird.

10. Vorrichtung nach Anspruch 1, dadurch gekennzeichnet, daß die Rollen (42) konisch sind und sich in Richtung des im Endbereich der Rollen (42) befindlichen Bundes (43) verjüngen.

11. Vorrichtung nach einem der Ansprüch 1 bis 10, dadurch gekennzeichnet, daß die Drehantriebsvorrichtung (50) eine konische Ringfläche (53) aufweist mit einer von den Rollen (42) fortgerichteten Neigung, gegen die die Reifenflanke angedrückt wird.

12. Vorrichtung nach einem der Ansprüche 1 bis 11, dadurch gekennzeichnet, daß die Rollen (42) mittels einer zweiten Verstellvorrichtung (46) quer zu ihren Achsen, vorzugsweise gemeinsam verstellbar sind und daß die Rollen (42) am Ende von Schwenkarmen (40) gelagert sind, die mittels eines Schwenkzapfens (37) ortsfest, jedoch drehbar am Lagerbauteil angelenkt sind und ein Schwenkantrieb an den Zapfen (37) angreift.

13. Vorrichtung nach Anspruch 12, dadurch gekennzeichnet, daß das Lagerbauteil eine Achse (30) aufweist, auf der eine Buchse (32) drehbar gelagert ist, an einem radialen Abschnitt (33) der Buchse (32) ein erster Schwenkhebel (35) angelenkt ist, der am anderen Ende an einem zweiten Schwenkhebel (36) angelenkt ist, der seinerseits am anderen Ende drehfest mit dem Schwenkzapfen (37) verbunden ist und der Schwenkantrieb an der Lagerbuchse (32) angreift.

14. Vorrichtung nach Anspruch 13, dadurch gekennzeichnet, daß ein Verstellzylinder (46) an einem Auslegearm (44) angelenkt ist, der radial von der Achse (30) absteht und fest mit dieser verbunden ist.

15. Vorrichtung nach einem der Ansprüche 11 bis 14, dadurch gekennzeichnet, daß die Ringfläche (53) gegenüber der Vertikalen geneigt ist.

16. Vorrichtung nach Anspruch 15, dadurch gekennzeichnet, daß ein Auswerfstift (56) in der Ringfläche (53) versenkbar gelagert ist und mittels einer Kraftvorrichtung in eine Position über die Ringfläche (53) hinausreichend verstellt wird.

17. Vorrichtung nach einem der Ansprüche 11 bis 16, dadurch gekennzeichnet, daß mittels einer sechsten Verstellvorrichtung eine zylindrische frei drehbar gelagerte Rolle vor die Ringfläche (53) schwenkbar ist.

## Claims

1. An apparatus for expanding vehicle tires in the bead zone, in particular for the visual inspection of the inner and outer wall of tires and for removing heat bursts, comprising a machine frame including a receiving means and at least three parallel rollers (42) rotatably supported about a carrier member (30) which rollers are adjusted by a first actuating means in the axial direction of said rollers (42), wherein the rollers (42) engage behind the rear bead of the tire with a flange (43) and press the corresponding tire flank against a rotating means (50, 53) when the carrier member (30) is displaced such that the tire is expanded and rotated around the stationary rollers (42) and comprising a feeding means (14) coordinated with said receiving means for a centered location of the tire to be checked in a distance with respect to the receiving means, characterized in that the feeding means (14) includes centering means (18) for a centered location of a tire in the feeding means and that a transfer means (12) including a gripping means (72) is provided to transport a tire from the feeding means (14) to the receiving means and that the gripping means (72) is rotatably mounted about an axis to turn the tire held in the gripping means about 180° and to press the opposite tire flank against the rotating means (50, 53).

2. The apparatus of claim 1, characterized in that the feeding means (14) includes a sloping feeding surface (17) and a pair of distantly mounted centering stops, preferrably centering rollers (18).

3. The apparatus of claim 2, characterized in that the centering stops (18) are movably mounted in the plane of the feeding surface (17) and that said stops are mounted by tensioning spring means (19).

4. The apparatus of one of claims 1 to 3, characterized in that the gripping means includes a pair of roller pairs (72) which engage diametrically opposed sides of the tire periphery and that the roller pairs (72) are movable towards each other and away from each other by a third actuating means (67).

5. The apparatus of one of claims 1 to 4, characterized in that the gripping means (12) includes a pair of arms (60, 61), which are pivotally mounted about an axis to be pivoted in common by a fourth actuating means (66) to rotate the gripping means between the feeding means (14) and the receiving means (11).

6. The apparatus of claim 4 and 5, characterized in that the third actuating means (67) is mounted between the arms (60, 61), which are separately pivotally mounted.

7. The apparatus of claims 4 to 6, characterized in that the axis connecting the rollers of a roller pair is rotably mounted by means of a rotating shaft which is coupled through a linkage (80, 81) to a fifth actuating means (82).

8. The apparatus of claim 7, characterized in that a locking means is provided for the rotating shaft of the second roller pair.

9. The apparatus of one of claims 1 to 8, characterized in that the gripping means initially rotates the tire received in the feeding means to an extent so that the flank of the tire which is free in the feeding means is brought into contact to the rotating means (50, 53) in the receiving means.

10. The apparatus of claim 1, characterized in that the rollers (42) are conical, wherein said rollers taper towards the flange (43) provided at the end zone of said rollers (42),

11. The apparatus of one of claims 1 to 10, characterized in that the rotating means (50) includes a conical annular face (53) having an inclination directed away from said rollers (42) against which annular face the tire flank is pressed.

12. The apparatus of one of claims 1 to 11, characterized in that the rollers (42) are adjustable by a second actuating means (46) in a direction normal to the roller axes, preferrably in common, and that the rollers (42) are mounted at the end of pivot arms (40), which are stationary but rotatably linked to a carrier member by means of a pin (37), wherein a pivoting drive engages said pin (37).

13. The apparatus of claim 12, characterized in that the carrier member includes a shaft (30) roatably supporting a sleeve (32), that a first pivot lever (35) is linked to a radial portion (33) of the sleeve (32), wherein the other end of said lever is linked to a second pivot lever (36), wherein the other end of said lever is non-rotatably connected to the pin (37) and that the pivoting drive engages the sleeve (32).

14. The apparatus of claim 13, characterized in that an actuating cylinder (46) is linked to an elongated arm (44) extending radially from the axis (30) and fixedly secured thereto.

15. The apparatus of one of claims 11 to 14, characterized in that the annular face (53) is inclined with respect to the vertical direction.

16. The apparatus of claim 15, characterized in that an ejector pin (56) is supported flush in the annular face (53), which pin is displaced in a position beyond the annular face (53) by a power means.

17. The apparatus of one of claims 11 to 16, characterized in that a cylindrical, freely rotatably supported roller is pivotable in front of the annular face (53) by a sixth actuating means.


## Revendications

1. Dispositif pour écarter les pneus de véhicules dans la zone du talon, en particulier pour un examen visuel de la paroi intérieure et extérieure des pneus, ainsi que pour éliminer des extrusions dues au chauffage, comportant un dispositif de réception prévu dans un bâti de machine, et sur lequel au moins trois rouleaux parallèles (42) sont montés à rotation sur une pièce formant palier (30), rouleaux qui sont montés de façon à pouvoir être déplacés dans leur direction axiale au moyen d'un premier dispositif de positionnement, étant entendu que les rouleaux (42) saisissent par derrière, avec un collet (43) le talon arrière du pneu et, lorsque la pièce formant palier (30) se déplace, appuient le flanc correspondant du pneu contre un dispositif de mise en rotation (50, 53), de telle façon que le pneu s'écarte et tourne autour des rouleaux (42) maintenus en position fixe, et comportant un dispositif d'alimentation (14), associé au dispositif de réception, pour mettre en position centrée le pneu à examiner, à une certaine distance du dispositif de réception, caractérisé en ce que le dispositif d'alimentation (14) présente des moyens de centrage (18) pour centrer le pneu dans le dispositif de réception, en ce qu'il est prévu un dispositif de manutention (12), qui comporte un dispositif de préhension (72) et qui transporte le pneu du dispositif d'alimentation (14) au dispositif de réception, et en ce que le dispositif de préhension (72) est monte tournant autour d'un axe, pour retourner de 180° le pneu serré, et appuyer l'autre flanc du pneu contre le dispositif de mise en rotation (50, 53).

2. Dispositif suivant la revendication 1, caractérisé en ce que le dispositif d'alimentation (14) présente une surface d'appui (17) inclinée, à laquelle sont associées deux butées de centrage placées à une certaine distance l'un de l'autre, de préférence des galets de centrage (18).

3. Dispositif suivant la revendication 2, caractérisé en ce que les butées de centrage (18) sont montées de façon à pouvoir se déplacer dans le plan de la surface d'appui (17) et sont maintenues au moyen d'un dispositif à ressort (19).

4. Dispositif suivant l'une quelconque des revendications 1 à 3, caractérisé en ce que le dispositif de préhension présente deux paires de galets (72) qui saisissent le pneu sur sa périphérie en deux points diamétralement opposés, et en ce que les paires de galets (72) peuvent être rapprochés ou écartés l'une de l'autre au moyen d'un troisième dispositif de positionnement (67).

5. Dispositif suivant l'une quelconque des revendications 1 à 4, caractérisé en ce que le dispositif de préhension (12) présente deux bras (60, 61) montés de façon à pouvoir pivoter ensemble autour d'un axe, et en ce qu'on peut les faire pivoter au moyen d'un quatrième dispositif de positionnement (66), pour faire pivoter le dispositif de préhension entre le dispositif d'alimentation (14) et le dispositif de réception (11).

6. Dispositif suivant la revendication 4 ou la revendication 5, caractérisé en ce que le troisième dispositif de positionnement (67) est disposé entre les bras (60, 61) qui sont montés de façon à pouvoir pivoter séparément.

7. Dispositif suivant l'une quelconque des revendications 4 à 6, caractérisé en ce que l'axe reliant les galets d'une paire est monté de façon à pouvoir pivoter au moyen d'un arbre tournant et que l'arbre tournant est accouplé, par l'intermédiaire d'un réducteur (80, 81), avec un cinquième dispositif de positionnement (82)

8. Dispositif suivant la revendication 7, caractérisé en ce qu'à l'arbre tournant de l'autre paire de galets est associé un dispositif de verrouillage.

9. Dispositif suivant l'une quelconque des revendications 1 à 8, caractérisé en ce que le dispositif de préhension fait d'abord tourner le pneu saisi par le dispositif d'alimentation (14) jusqu'à ce que le flanc qui est libre dans le dispositif d'alimentation (14) soit mis dans le dispositif de réception, pour venir en contact avec le dispositif de mise en rotation (50, 53).

10. Dispositif suivant la revendication 1, caractérisé en ce que les rouleaux (42) sont coniques et vont en s'amincissant dans la direction du collet (43) qui se trouve dans la zone d'extrémité des rouleaux (42).

11. Dispositif suivant l'une quelconque des revendications 1 à 10, caractérisé en ce que le dispositif de mise en rotation (50) comporte une surface annulaire conique (53) présentant une pente inclinée à l'opposé des rouleaux (42) et contre laquelle viennent s'appuyer les flancs du pneu.

12. Dispositif suivant l'une quelconque des revendications 1 à 11, caractérisé en ce que les rouleaux (42) peuvent se déplacer perpendiculairement à leur axe, de préférence ensemble, au moyen d'un deuxième dispositif de positionnement (46) et en ce que les rouleaux (42) sont montés à l'extrémité de bras de pivotement (40) qui sont montés sur la pièce formant palier, au moyen d'un pivot (37), de façon à être fixés en position mais en pouvant cependant tourner, s'articulent et en ce qu'un dispositif de pivotement attaque les pivots (37).

13. Dispositif suivant la revendication 12, caractérisé en ce que la pièce formant palier présente un axe (30), sur lequel une douille (32) est montée tournante, en ce que, sur une partie radiale (33) de la douille (32) s'articule un premier levier pivotant (35) qui, à son autre extrémité, s'articule sur un deuxième levier pivotant (36), qui, de son côté, est, à l'autre l'extrémité, relié sans pouvoir tourner au pivot (37) et en ce que le dispositif de pivotement attaque la douille de palier (32).

14. Dispositif suivant la revendication 13, caractérisé en ce qu'un vérin de positionnement (46) s'articule sur un bras support (44), décalé radialement de l'axe (30), et lié de façon fixe avec lui.

15. Dispositif suivant l'une quelconque des revendications 11 à 14, caractérisé en ce que la surface annulaire (53) est inclinée par rapport à la verticale.

16. Dispositif suivant la revendication 15, caractérisé en ce qu'une tige d'éjection (56) effaçable est montée dans la surface annulaire (53) et est déplacée, au moyen d'un dispositif mécanique, vers une position dépassant au delà de la surface annulaire (53).

17. Dispositif suivant l'une quelconque des revendications 11 à 16, caractérisé en ce qu'au moyen d'un sixième dispositif de positionnement, on peut faire pivoter un rouleau cylindrique monté tournant librement, pour le placer devant la surface annulaire (53).

# Fig. 1

# Fig. 2

# Fig. 3

Fig. 4

Fig. 5

# Fig. 6